# EUROPEAN PATENT APPLICATION

(11) **EP 4 830 976 A1**
(43) Date of publication of application: **28.10.2026**
(21) Application number: 25878782.9
(22) Date of filing: 12.08.2025
(51) Int. Cl.: B60L 15/20

(54) **MOTOR TORQUE CONTROL METHOD AND APPARATUS, AND STORAGE MEDIUM**

(30) Priority: 16.10.2024 CN 202411445395
(71) Applicant: Chery Automobile Co., Ltd., Wuhu, Anhui 241006 (CN)
(72) Inventor: YANG, Xu, Wuhu, Anhui 241006 (CN); CHENG, Chang, Wuhu, Anhui 241006 (CN); LI, Linlin, Wuhu, Anhui 24100 (CN); QUAN, Yaoguo, Wuhu, Anhui 241006 (CN); QUAN, Shupeng, Wuhu, Anhui 241006 (CN)
(74) Representative: Adamson Jones
(86) International application number: PCT/CN2025/114168
(87) International publication number: WO 2026/081641

(57) **Abstract**

A motor torque control method and apparatus, and a storage medium. The method comprises: on the basis of a first rotational speed of a motor at the current moment and a second rotational speed of the motor at the previous moment, determining whether a vehicle satisfies a first trigger condition corresponding to an anti-jitter mode; when the first trigger condition is satisfied, determining a compensation torque at the next moment on the basis of the first rotational speed and an anti-jitter angular velocity at the current moment; and updating the current torque on the basis of the compensation torque to obtain a target torque at the next moment.

## Description

The present disclosure claims priority to Chinese Patent Application No. 202411445395.6, filed October 16, 2024, and entitled "METHOD AND DEVICE FOR CONTROLLING MOTOR TORQUE, AND STORAGE MEDIUM", the entire contents of which are incorporated herein by reference.

### TECHNICAL FIELD

The present disclosure relates to the technical field of vehicle control, and particularly to a method for controlling motor torque and a device for controlling motor torque, as well as a storage medium.

### BACKGROUND

With the rapid development of the automotive industry, pure electric vehicles and hybrid electric vehicles have been widely adopted.

On the one hand, due to the physical characteristic of pure electric vehicles or hybrid electric vehicles, where the motor is directly connected to the wheels through a single-stage transmission without a gear shifting structure, the vehicle is prone to insufficient damping during operation, which further causes vehicle vibration. On the other hand, the torque of the motor often changes frequently and significantly during driving, and there is also a transmission gear surface switching caused by changes in torque direction. The underdamping characteristic caused by the relatively simple transmission system makes the vehicle prone to vibration issues during various driving conditions, such as vehicle startup, rapid acceleration, rapid deceleration, the transition from driving to energy recovery during acceleration, and exiting energy recovery mode. These issues further affect the driver's riding experience.

Based on this, how to improve the vehicle vibration phenomenon that occurs during the driving of pure electric vehicles and hybrid electric vehicles has become an urgent problem to be solved.

### SUMMARY

The present disclosure provides a method and a device for controlling motor torque, which can reduce the problem of vehicle vibration during driving, thereby enhancing the driver's riding experience. The technical solution is as follows:

On the one hand, a method for controlling motor torque is provided, which includes:
acquiring a first rotational speed of a motor at a current moment, a second rotational speed at a previous moment of the motor, and current torque of the motor;
judging whether a vehicle meets a first triggering condition corresponding to an anti-shake mode based on the first rotational speed and the second rotational speed;
determining compensatory torque at a next moment based on the first rotational speed and an anti-shake angular velocity at the current moment, if the vehicle satisfies the first triggering condition, wherein the anti-shake angular velocity is determined based on an anti-shake angular velocity at the previous moment and compensatory torque at the current moment; and
updating the current torque based on the compensatory torque to acquire target torque at the next moment.

Optionally, the judging whether the vehicle meets the first triggering condition corresponding to the anti-shake mode includes:
determining a maximum value between a first anti-shake rotational speed and a preset second anti-shake rotational speed as a target anti-shake rotational speed, wherein the first anti-shake rotational speed is a preset multiple of the first rotational speed; and
determining that the vehicle meets the first triggering condition, if an absolute value of a difference between the first rotational speed and the second rotational speed is greater than the target anti-shake rotational speed.

Optionally, the determining the compensatory torque at the next moment based on the first rotational speed and the anti-shake angular velocity at the current moment includes:
determining an anti-shake rotational speed corresponding to the anti-shake angular velocity at the current moment;
adjusting a PID controller based on the anti-shake rotational speed and the first rotational speed to acquire a compensatory rotational speed; and;
determining the compensatory torque based on the compensatory rotational speed.

Optionally, the determining the compensatory torque based on the compensatory rotational speed includes:
acquiring initial torque based on the compensatory rotational speed;
filtering the initial torque; and
applying a threshold limiting to filtered initial torque based on a preset torque range to acquire the compensatory torque, such that the compensatory torque falls within the preset torque range.

Optionally, determining the anti-shake angular velocity at the current moment includes:
acquiring moment of inertia, the compensatory torque at the current moment, the anti-shake angular velocity at the previous moment, and a preset time interval, wherein the preset time interval is a time difference between the current moment and the previous moment;
determining an anti-shake angular acceleration at the current moment based on the compensatory torque at the current moment and the moment of inertia; and
determining the anti-shake angular velocity at the current moment based on the anti-shake angular acceleration at the previous moment, the anti-shake angular velocity at the previous moment, and the preset time interval.

Optionally, the acquiring the first rotational speed of the motor at the current moment includes:
calculating the first rotational speed of the motor based on a rotation angle of the motor and a rotation time of the motor.

On the other hand, a device for controlling motor torque is provided, which includes:
a first acquiring module, configured to acquire a first speed of a motor at a current moment, a second speed at a previous moment, and current torque;
a judging module, configured to judge whether a vehicle meets a first triggering condition corresponding to an anti-shake mode based on the first rotational speed and the second rotational speed;
a first determination module, configured to determine compensatory torque at a next moment based on the first rotational speed and an anti-shake angular velocity at the current moment, if the vehicle satisfies the first trigger condition, wherein the anti-shake angular velocity is determined based on an anti-shake angular velocity at the previous moment and compensatory torque at the current moment; and
an updating module, configured to update the current torque based on the compensatory torque to acquire the target torque at the next moment.

Optionally, the judging module includes:
a first determination sub-module, configured to determine a maximum value between a first anti-shake rotational speed and a preset second anti-shake rotational speed as a target anti-shake rotational speed, wherein the first anti-shake rotational speed is a preset multiple of the first rotational speed; and
a second determining sub-module, configured to determine that the vehicle meets the first triggering condition, if an absolute value of a difference between the first rotational speed and the second rotational speed is greater than the target anti-shake rotational speed.

Optionally, the first determination module includes:
a third determining sub-module, configured to determine an anti-shake rotational speed corresponding to the anti-shake angular velocity at the current moment;
a first calculation sub-module, configured to adjust a PID controller based on the anti-shake rotational speed and the first rotational speed to acquire a compensatory rotational speed; and
a fourth determining sub-module, configured to determine the compensatory torque based on the compensatory rotational speed.

Optionally, the fourth determination sub-module is configured to: acquire initial torque based on the compensatory rotational speed; filter the initial torque; and apply a threshold limiting to filtered initial torque based on a preset torque range to acquire the compensatory torque, such that the compensatory torque falls within the preset torque range.

Optionally, the device further includes:
a second acquiring module, configured to acquire moment of inertia, the compensatory torque at the current moment, the anti-shake angular velocity at the previous moment, and a preset time interval, wherein the preset time interval is a time difference between the current moment and the previous moment;
a second determination module, configured to determine an anti-shake angular acceleration at the current moment based on the compensatory torque at the current moment and the moment of inertia; and
a third determination module, configured to determine the anti-shake angular velocity at the current moment based on the anti-shake angular acceleration at the previous moment, the anti-shake angular velocity at the previous moment, and the preset time interval.

Optionally, the first acquiring module includes:
the second calculation sub-module, configured to calculate the first rotational speed of the motor based on a rotation angle of the motor and a rotation time of the motor.

On the other hand, a computer equipment is provided, which includes one or more processors and one or more memories. At least one instruction is stored in the one or more memories, and the at least one instruction is loaded and executed by the one or more processors to implement the operations performed by the aforementioned method for controlling motor torque.

On the other hand, a storage medium is provided, in which at least one instruction is stored. The at least one instruction is loaded and executed by a processor to implement the operations performed by the aforementioned method for controlling motor torque.

The beneficial effects brought by the technical solution provided in the present disclosure include at least:
The present disclosure provides a method for controlling motor torque. It judges whether the vehicle meets the first triggering condition corresponding to the anti-shake mode based on the first speed of the motor at the current moment and the second speed at the previous moment. When the first triggering condition is met, the compensatory torque at the next moment is determined based on the first speed and the anti-shake angular velocity at the current moment. The current torque is updated based on the compensatory torque to acquire the target torque at the next moment. In this way, after meeting the first triggering condition, the motor speed fluctuation can be effectively suppressed in real time, thereby suppressing the vehicle's shaking and improving the driving comfort of the vehicle.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a flowchart of a method for controlling motor torque according to some embodiments of the present disclosure;
FIG. 2 is a flowchart of another method for controlling motor torque according to some embodiments of the present disclosure;
FIG. 3 is a flowchart of steps for determining an anti-shake angular velocity at the current moment according to some embodiments of the present disclosure; and
FIG. 4 is a schematic structural diagram of a device for controlling motor torque according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

Electric vehicles can include both pure electric vehicles and hybrid electric vehicles. Electric vehicles are powered by on-board power sources and driven by electric motors. Due to the physical characteristic of pure electric vehicles or hybrid electric vehicles, where the motor is directly connected to the wheels through a single-stage transmission without a gear-shifting structure, the vehicle is prone to insufficient damping during operation, which can further cause vehicle vibration. On the other hand, the torque of the motor often changes frequently and significantly during driving, and there is also a transmission gear surface switching caused by changes in torque direction. The relatively simple transmission system results in under-damping characteristics, making the vehicle prone to overall vibration issues during conditions such as vehicle startup, rapid acceleration, rapid deceleration, the transition from driving to energy recovery during acceleration, and exiting energy recovery.

Based on this, embodiments of the present disclosure provide a method for controlling motor torque, which effectively suppresses motor vibration in automobiles and improves the driving comfort of vehicles.

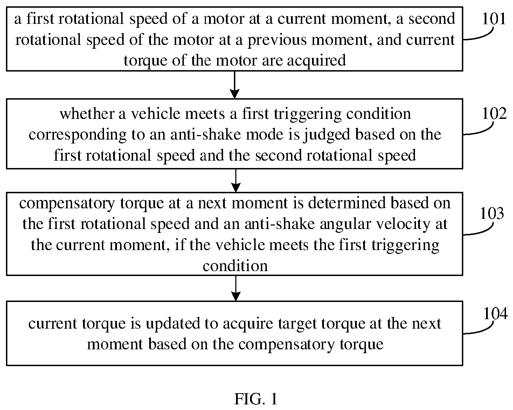

FIG. 1 is a flowchart of a method for controlling motor torque according to some embodiments of the present disclosure, which can be applied to a vehicle control unit in an electric vehicle. Referring to FIG. 1, the method includes the following steps.

Step 101: a first rotational speed of a motor at a current moment, a second rotational speed of the motor at a previous moment, and current torque of the motor are acquired.

Step 102: whether a vehicle meets a first triggering condition corresponding to an anti-shake mode is judged based on the first rotational speed and the second rotational speed.

Step 103: compensatory torque at a next moment is determined based on the first rotational speed and an anti-shake angular velocity at the current moment, if the vehicle meets the first triggering condition.

The anti-shake angular velocity is determined based on an anti-shake angular velocity at a previous moment and compensatory torque at the current moment.

Step 104: current torque is updated to acquire target torque at the next moment based on the compensatory torque.

The present disclosure provides a method for controlling motor torque. It judges whether the vehicle meets the first triggering condition corresponding to the anti-shake mode based on the first rotational speed of the motor at the current moment and the second rotational speed of the motor at the previous moment. When the first triggering condition is met, it indicates that the vehicle is experiencing a shaking phenomenon under the current operating conditions. Then, the compensatory torque at the next moment is determined based on the first rotational speed and the anti-shake angular velocity at the current moment. Based on the compensatory torque, the current torque is updated to acquire the target torque at the next moment. In this way, after meeting the first triggering condition, the motor rotational speed fluctuation can be effectively suppressed in real time, thereby suppressing the shaking of the vehicle and improving the driving comfort of the vehicle.

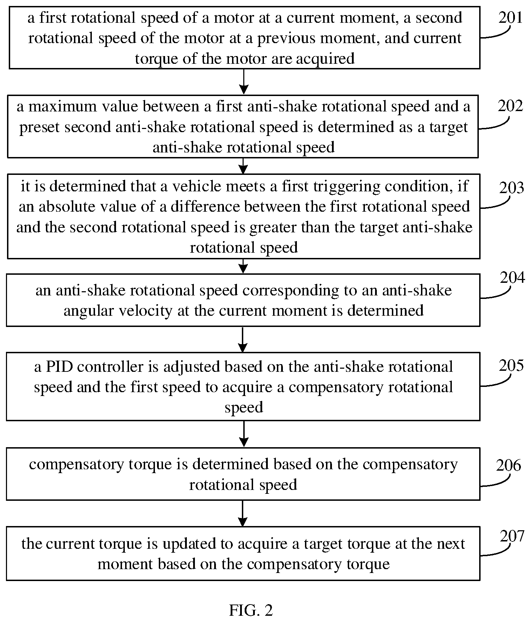

FIG. 2 is a flowchart of another method for controlling motor torque provided by embodiments of the present disclosure, which can be applied to the vehicle control unit in electric vehicles. Referring to FIG. 2, the method includes the following steps.

Step 201: a first rotational speed of a motor at a current moment, a second rotational speed of the motor at a previous moment, and current torque of the motor are acquired.

The first rotational speed of the motor at the current moment can be the real-time rotational speed of the motor calculated in real time. In embodiments of the present disclosure, the first rotational speed of the motor can be calculated based on the rotation angle of the motor and the rotation time of the motor. The rotation angle of the motor refers to a rotation angle from the previous moment to the current moment, and the rotation time of the motor refers to the time from the previous moment to the current moment. Specifically, the first rotational speed is acquired by dividing the rotation angle by the rotation time.

In the embodiments of the present disclosure, the second rotation speed at the previous moment is acquired by dividing a rotation angle by the time, where the rotation angle is rotated from a moment before the previous moment to the previous moment, and the time corresponds to rotating the rotation angle.

In the embodiments of the present disclosure, the current torque is determined based on a control signal providing a certain output torque value according to the current state of the vehicle.

Step 202: a maximum value between a first anti-shake rotational speed and a preset second anti-shake rotational speed is determined as a target anti-shake rotational speed.

The first anti-shake rotational speed is a preset multiple of the first rotational speed. In embodiments of the present disclosure, the preset multiple may be any one of 1%-1.5%.

The preset second anti-shake rotational speed is set according to different situations. In embodiments of the present disclosure, the preset second anti-shake rotational speed may be a minimum value of the motor rotational speed difference, or a preset rotational speed value.

In the embodiments of the present disclosure, the first anti-shake rotational speed is compared with the preset second anti-shake rotational speed, and the maximum value of the two is taken as the target anti-shake rotational speed. If the first anti-shake rotational speed is greater than the preset second anti-shake rotational speed, the first anti-shake rotational speed is taken as the target anti-shake rotational speed. If the first anti-shake rotational speed is less than the preset second anti-shake rotational speed, the second anti-shake rotational speed is taken as the target anti-shake rotational speed. If the first anti-shake rotational speed is equal to the preset second anti-shake rotational speed, either of the two is taken as the target anti-shake rotational speed.

Step 203: it is determined that a vehicle meets a first triggering condition, if an absolute value of a difference between the first rotational speed and the second rotational speed is greater than the target anti-shake rotational speed.

It should be noted that according to the embodiments of the present disclosure, the output torque is supplemented on the basis of the the current torque provided by the vehicle motor control system through the compensatory torque calculated in the anti-shake mode, such that the output target torque can improve the phenomenon of vehicle shake. Therefore, when the vehicle enters the anti-shake mode, it can suppress the vehicle shake phenomenon. When the vehicle enters the anti-shake mode, the first triggering condition needs to be met. If the vehicle does not meet this condition, it indicates that the vehicle is not currently experiencing a shake phenomenon or the overall vehicle shake level is low. Therefore, there is no need to control the vehicle motor, and no compensatory torque is output.

Step 204: an anti-shake rotational speed corresponding to an anti-shake angular velocity at the current moment is determined.

The anti-shake angular velocity is determined based on the anti-shake angular velocity at the previous moment and the compensatory torque at the current moment.

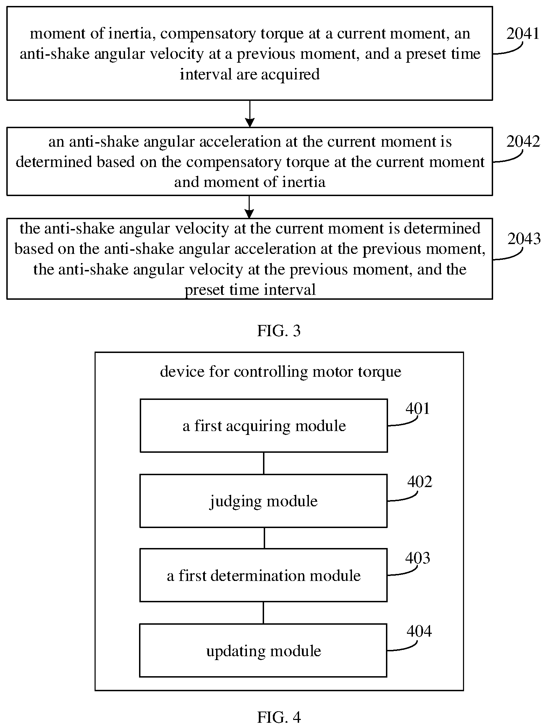

In the embodiments of the present disclosure, as shown in FIG. 3, the determination step of anti-shake angular velocity at the current moment includes the following steps 2041-2043:
Step 2041: moment of inertia, compensatory torque at a current moment, an anti-shake angular velocity at a previous moment, and a preset time interval are acquired.

The preset time interval is the time difference between the current moment and the previous moment.

In the embodiments of the present disclosure, the moment of inertia is related to the mass of the vehicle, the axle differential ratio from the motor to the wheel, and the wheel radius.

The moment of inertia is determined by Formula 1, which is as follows:
$J = m □ {\left(\frac{{R}_{2}}{{R}_{1}}\right)}^{2}$ Formula 1

*J* is the moment of inertia, *m* is the mass of the vehicle, *R*₁ is the axle differential ratio from the motor to the wheel, and *R*₂ is the wheel radius.

In the embodiments of the present disclosure, the method for determining the compensatory torque at the current moment is consistent with the method described in steps 204-206 for determining the compensatory torque at the next moment for compensating the current torque where the next moment is moment K+1. The only difference is the moment for which the compensatory torque is determined. The compensatory torque at the current moment may correspond to the compensatory torque at moment K. By replacing K+1 with K, the compensatory torque corresponding to moment K can be calculated based on steps 204-206.

In the embodiments of the present disclosure, the anti-shake angular velocity at the previous moment is determined through formula two, which is as follows:
$ω \left(k-1\right) = ω \left(k-2\right) + \left[\frac{T \left(k-1\right)}{J}\right] □ Δ t$ Formula 2

*ω*(*k* - 1) is the anti-shake angular velocity at the previous moment, *ω*(*k* - 2) is the anti-shake angular velocity corresponding to two previous moments at the current moment, *T*(*k* - 1) is the compensatory torque at the previous moment, *J* is the moment of inertia, and Δ*t* is the preset time interval.

It should be noted that the determination method for the anti-shake angular velocity at the previous moment, as well as the anti-shake angular velocities corresponding to the two previous moments at the current moment, can be referred to the determination method for the anti-shake angular velocity at the current moment. By replacing K with K-1, the anti-shake angular velocity corresponding to the moment K-1 can be calculated based on steps 2041 to 2043. Similarly, by replacing K with K-2, the anti-shake angular velocity corresponding to the moment K-2 can be calculated based on steps 2041 to 2043.

Step 2042: an anti-shake angular acceleration at the current moment is determined based on the compensatory torque at the current moment and moment of inertia.

In the embodiments of the present disclosure, the anti-shake angular acceleration at the current moment is determined based on the compensatory torque at the current moment and the moment of inertia through Formula 3, which is as follows:
$a \left(k\right) = \frac{T \left(k\right)}{J}$ Formula 3

*a*(*k*) is the anti-shake angular acceleration at the current moment, *T*(*k*) is the compensatory torque at the current moment, and *J* is the moment of inertia.

Step 2043: the anti-shake angular velocity at the current moment is determined based on the anti-shake angular acceleration at the previous moment, the anti-shake angular velocity at the previous moment, and the preset time interval.

In the embodiments of the present disclosure, the anti-shake angular velocity at the current moment is determined based on the anti-shake angular acceleration at the previous moment, the anti-shake angular velocity at the previous moment, and the preset time interval through Formula 4, which is as follows:
$ω \left(k\right) = ω \left(k-1\right) + a \left(k\right) □ Δ t$ Formula 4

*ω*(*k* - 1) is the anti-shake angular velocity at the previous moment, *ω*(*k*) is the anti-shake angular velocity at the current moment, *a*(*k*) is the anti-shake angular acceleration at the current moment, and Δ*t* is the preset time interval.

In the embodiments of the present disclosure, the anti-shake rotational speed corresponding to the anti-shake angular velocity at the current moment is determined through Formula 5, which is as follows:
$n \left(k\right) = 2 π \frac{ω \left(k\right)}{60}$ Formula 5

*n*(*k*) is the anti-shake rotational speed at the current moment, *ω*(*k*) is the anti-shake angular velocity at the current moment, and *π* is the circumference ratio. The unit of *ω*(*k*) is rad/s, and the unit of *n*(*k*) is r/min.

It should be noted that if the first triggering condition is just triggered at the current moment, and the current moment is the initial moment when entering the anti-shake mode, then the values of the parameters corresponding to the moments before the current moment are defaulted to the initial values. For example, the anti-shake angular velocity and the compensatory torque at the previous moment are the initial values, which can be zero. If the current moment is not the initial moment when entering the anti-shake mode, the anti-shake angular velocity and the compensatory torque at the previous moment are calculated according to the above method.

Step 205: a PID controller is adjusted based on the anti-shake rotational speed and the first speed to acquire a compensatory rotational speed.

In the embodiments of the present disclosure, the anti-shake rotational speed at the current moment and the first rotational speed at the current moment are inputted into the PID controller. Based on a rotational speed difference between the anti-shake rotational speed at the current moment and the first rotational speed at the current moment, the PID controller determines adjustment parameters of the PID controller corresponding to the difference by looking up a table. The adjustment parameters include proportional adjustment parameters, integral adjustment parameters, and derivative adjustment parameters. Thus, the PID controller is adjusted according to the proportional adjustment parameters, integral adjustment parameters, and derivative parameters. Based on the determined adjustment parameters of the PID controller, a compensatory torque can be calculated, thereby acquiring a compensatory torque that adjusts and suppresses vehicle shake.

The table consulted for determining the adjustment parameters of the PID controller is a one-dimensional look-up table that maps the speed difference values to the proportional adjustment parameter, integral adjustment parameter, and derivative adjustment parameter. That is to say, after the speed difference value of the current motor speed is determined, a proportional adjustment parameter, an integral adjustment parameter, and a derivative adjustment parameter can be acquired by consulting the table.

Step 206: compensatory torque is determined based on the compensatory rotational speed.

In the embodiments of the present disclosure, the compensatory torque is determined based on the compensatory rotational speed, including:
the initial torque is acquired based on the compensatory rotational speed; the initial torque is filtered; a threshold limiting is applied to filtered initial torque based on a preset torque range to acquire the compensatory torque, such that the compensatory torque falls within the preset torque range.

In the embodiments of the present disclosure, the initial torque being acquired based on the compensatory rotational speed includes: the speed change rate corresponding to the current compensatory rotational speed is multiplied by the moment of inertia to acquire the initial torque at the next moment. The speed change rate corresponding to the current compensatory rotational speed is acquired by dividing the difference between the current compensatory rotational speed and the compensatory rotational speed at the previous moment by a preset time interval.

It should be noted that the compensatory rotational speed, the initial torque, and the compensatory torque in step 206 are all data corresponding to the next moment, so as to facilitate the subsequent updating of the current torque based on the compensatory torque at the next moment.

In the embodiments of the present disclosure, the filtering the initial torque includes: lowpass filtering is performed on the initial torque to acquire a filtered initial torque. The filtered initial torque can suppress high-frequency noise and improve the stability and reliability of the initial torque.

In the embodiments of the present disclosure, based on the preset torque range, the threshold limiting is applied to the filtered initial torque to acquire the compensatory torque, which includes: a magnitude relationship between the filtered initial torque and the preset torque range is compared, it is judged whether the filtered initial torque falls within the torque range, and if so, the filtered initial torque is used as the compensatory torque; if not, any torque value within the torque range is used as the compensatory torque.

Specifically, when the initial torque after the filtering process is not within the torque range, an upper limit and a lower limit corresponding to the preset torque range can be determined. The limit closest to the initial torque after the filtering process between the upper limit and the lower limit is taken as the compensatory torque.

Step 207: the current torque is updated to acquire a target torque at the next moment based on the compensatory torque.

In the embodiments of the present disclosure, the compensatory torque is added to the current torque to acquire the target torque. After acquiring the target torque, the control motor rotates according to the target torque.

The present disclosure provides a method for controlling motor torque. It judges whether the vehicle meets the first triggering condition corresponding to the anti-shake mode based on the first rotational speed of the motor at the current moment and the second rotational speed of the motor at the previous moment. When the first triggering condition is met, it indicates that the vehicle is experiencing a shaking phenomenon under the current operating conditions. Then, the compensatory torque at the next moment is determined based on the first rotational speed and the anti-shake angular velocity at the current moment. Based on the compensatory torque, the current torque is updated to acquire the target torque at the next moment. In this way, after meeting the first triggering condition, the motor rotational speed fluctuation can be effectively suppressed in real time, thereby suppressing the shaking of the vehicle and improving the driving comfort of the vehicle.

FIG. 4 is a schematic structural diagram of a control device for motor torque according to some embodiments of the present disclosure. Referring to FIG. 4, the control device includes a first acquiring module 401, a judging module 402, a first determination module 403 and an updating module 404.

The first acquiring module 401 is configured to acquire a first rotational speed of a motor at a current moment, a second rotational speed of the motor at a previous moment, and current torque of the motor.

The judging module 402 is configured to judge whether a vehicle meets a first triggering condition corresponding to an anti-shake mode based on the first rotational speed and the second rotational speed.

The first determination module 403 is configured to determine compensatory torque at the next moment based on the first rotational speed and an anti-shake angular velocity at the current moment, if the vehicle meets the first triggering condition, wherein the anti-shake angular velocity is determined based on the anti-shake angular velocity at the previous moment and the compensatory torque at the current moment.

The updating module 404 is configured to update current torque to acquire target torque at the next moment based on the compensatory torque.

Optionally, the judging module 402 includes:
a first determination sub-module, configured to determine a maximum value between a first anti-shake rotational speed and a preset second anti-shake rotational speed as a target anti-shake rotational speed, where the first anti-shake rotational speed is a preset multiple of the first rotational speed; and
a second determination sub-module, configured to determine that the vehicle meets the first triggering condition, if an absolute value of a difference between a first rotational speed and a second rotational speed is greater than the target anti-shake rotational speed.

Optionally, the first determination module 403 includes:
a third determining sub-module, configured to determine an anti-shake rotational speed corresponding to an anti-shake angular velocity at the current moment;
a first calculation sub-module, configured to adjust a PID controller based on the anti-shake rotational speed and the first rotational speed to acquire a compensatory rotational speed; and
a fourth sub-module is configured to determine compensatory torque based on the compensatory rotational speed.

Optionally, a fourth determining sub-module is configured to: acquire the initial torque based on the compensatory rotational speed; filter the initial torque; and apply a threshold limiting to filtered initial torque based on a preset torque range to acquire a compensatory torque, such that the compensatory torque falls within the preset torque range.

Optionally, the device further includes:
a second acquiring module, configured to acquire moment of inertia, compensatory torque at a current moment, an anti-shake angular velocity at a previous moment, and a preset time interval, where the preset time interval is the time difference between the current moment and the previous moment;
a second determination module, configured to determine an anti-shake angular acceleration at the current moment based on the compensatory torque at the current moment and moment of inertia; and
a third determination module, configured to determine the anti-shake angular velocity at the current moment based on the anti-shake angular acceleration at the previous moment, the anti-shake angular velocity at the previous moment, and the preset time interval.

Optionally, the first acquiring module 401 includes:
a second calculation sub-module, configured to calculate the first rotational speed of the motor based on the rotation angle of the motor and the rotation time of the motor.

The present disclosure provides a device for controlling motor torque. It judges whether the vehicle meets the first triggering condition corresponding to the anti-shake mode based on the first rotational speed of the motor at the current moment and the second rotational speed of the motor at the previous moment. When the first triggering condition is met, it indicates that the vehicle is experiencing a shaking phenomenon under the current operating conditions. Then, the compensatory torque at the next moment is determined based on the first rotational speed and the anti-shake angular velocity at the current moment. Based on the compensatory torque, the current torque is updated to acquire the target torque at the next moment. In this way, after meeting the first triggering condition, the motor rotational speed fluctuation can be effectively suppressed in real time, thereby suppressing the shaking of the vehicle and improving the driving comfort of the vehicle.

It is understandable that the control device for motor torque provided in the above embodiment is exemplified only based on the division of the aforementioned functional modules. In practical applications, the above functions can be allocated to different functional modules as needed, that is, the internal structure of the device can be divided into different functional modules to accomplish all or part of the functions described above.

In addition, the embodiments of the device for controlling motor torque and the method for controlling motor torque provided in the above embodiments belong to the same concept. The specific implementation process is detailed in the method embodiments and will not be further elaborated here.

The embodiments of the present disclosure further provide a computer equipment, which includes one or more processors and one or more memories. At least one instruction is stored in the one or more memories, and the instruction is loaded and executed by the one or more processors to implement the operations performed by the method for controlling motor torque in the above-mentioned method embodiments.

The embodiments of the present disclosure further provide a storage medium, in which at least one instruction is stored. The instruction is loaded and executed by a processor to implement the operations performed by the method for controlling motor torque in the aforementioned method embodiments.

Those skilled in the art can understand that all or part of the steps for implementing the above embodiments can be accomplished through hardware, or can be instructed to relevant hardware through a program. The program can be stored in a computer-readable storage medium, and the aforementioned storage medium can be a read-only memory, a magnetic disk, an optical disk, or the like.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for controlling motor torque, comprising:
acquiring a first rotational speed of a motor at a current moment, a second rotational speed at a previous moment of the motor, and current torque of the motor;
judging whether a vehicle meets a first triggering condition corresponding to an anti-shake mode based on the first rotational speed and the second rotational speed;
determining compensatory torque at a next moment based on the first rotational speed and an anti-shake angular velocity at the current moment, if the vehicle satisfies the first triggering condition, wherein the anti-shake angular velocity is determined based on an anti-shake angular velocity at the previous moment and compensatory torque at the current moment; and
updating the current torque based on the compensatory torque to acquire target torque at the next moment.

2. The method according to claim 1, wherein the judging whether the vehicle meets the first triggering condition corresponding to the anti-shake mode comprises:
determining a maximum value between a first anti-shake rotational speed and a preset second anti-shake rotational speed as a target anti-shake rotational speed, wherein the first anti-shake rotational speed is a preset multiple of the first rotational speed; and
determining that the vehicle meets the first triggering condition, if an absolute value of a difference between the first rotational speed and the second rotational speed is greater than the target anti-shake rotational speed.

3. The method according to claim 1, wherein the determining the compensatory torque at the next moment based on the first rotational speed and the anti-shake angular velocity at the current moment comprises:
determining an anti-shake rotational speed corresponding to the anti-shake angular velocity at the current moment;
adjusting a PID controller based on the anti-shake rotational speed and the first rotational speed to acquire a compensatory rotational speed; and
determining the compensatory torque based on the compensatory rotational speed.

4. The method according to claim 3, wherein the determining the compensatory torque based on the compensatory rotational speed comprises:
acquiring initial torque based on the compensatory rotational speed;
filtering the initial torque; and
applying a threshold limiting to filtered initial torque based on a preset torque range to acquire the compensatory torque, such that the compensatory torque falls within the preset torque range.

5. The method according to claim 1, wherein determining the anti-shake angular velocity at the current moment comprises:
acquiring moment of inertia, the compensatory torque at the current moment, the anti-shake angular velocity at the previous moment, and a preset time interval, wherein the preset time interval is a time difference between the current moment and the previous moment;
determining an anti-shake angular acceleration at the current moment based on the compensatory torque at the current moment and the moment of inertia; and
determining the anti-shake angular velocity at the current moment based on the anti-shake angular acceleration at the previous moment, the anti-shake angular velocity at the previous moment, and the preset time interval.

6. The method according to claim 1, wherein the acquiring the first rotational speed of the motor at the current moment comprises:
calculating the first rotational speed of the motor based on a rotation angle of the motor and a rotation time of the motor.

7. A device for controlling motor torque, comprising:
a first acquiring module, configured to acquire a first speed of a motor at a current moment, a second speed at a previous moment, and current torque;
a judging module, configured to judge whether a vehicle meets a first triggering condition corresponding to an anti-shake mode based on the first rotational speed and the second rotational speed;
a first determination module, configured to determine compensatory torque at a next moment based on the first rotational speed and an anti-shake angular velocity at the current moment, if the vehicle satisfies the first trigger condition, wherein the anti-shake angular velocity is determined based on an anti-shake angular velocity at the previous moment and compensatory torque at the current moment; and
an updating module, configured to update the current torque based on the compensatory torque to acquire the target torque at the next moment.

8. The device according to claim 7, wherein the judging module comprises:
a first determination sub-module, configured to determine a maximum value between a first anti-shake rotational speed and a preset second anti-shake rotational speed as a target anti-shake rotational speed, wherein the first anti-shake rotational speed is a preset multiple of the first rotational speed; and
a second determining sub-module, configured to determine that the vehicle meets the first triggering condition, if an absolute value of a difference between the first rotational speed and the second rotational speed is greater than the target anti-shake rotational speed.

9. The device according to claim 7, wherein the first determination module comprises:
a third determining sub-module, configured to determine an anti-shake rotational speed corresponding to the anti-shake angular velocity at the current moment;
a first calculation sub-module, configured to adjust a PID controller based on the anti-shake rotational speed and the first rotational speed to acquire a compensatory rotational speed; and
a fourth determining sub-module, configured to determine the compensatory torque based on the compensatory rotational speed.

10. The device according to claim 9, wherein the fourth determination sub-module is configured to: acquire initial torque based on the compensatory rotational speed; filter the initial torque; and apply a threshold limiting to filtered initial torque based on a preset torque range to acquire the compensatory torque, such that the compensatory torque falls within the preset torque range.

11. The device according to claim 7, wherein the device further comprises:
a second acquiring module, configured to acquire moment of inertia, the compensatory torque at the current moment, the anti-shake angular velocity at the previous moment, and a preset time interval, wherein the preset time interval is a time difference between the current moment and the previous moment;
a second determination module, configured to determine an anti-shake angular acceleration at the current moment based on the compensatory torque at the current moment and the moment of inertia; and
a third determination module, configured to determine the anti-shake angular velocity at the current moment based on the anti-shake angular acceleration at the previous moment, the anti-shake angular velocity at the previous moment, and the preset time interval.

12. The device according to claim 7, wherein the first acquiring module comprises:
the second calculation sub-module, configured to calculate the first rotational speed of the motor based on a rotation angle of the motor and a rotation time of the motor.

13. A computer equipment, wherein the computer equipment comprises one or more processors and one or more memories, at least one instruction is stored in the one or more memories, the at least one instruction is loaded and executed by the one or more processors to implement operations performed by the method for controlling motor torque according to any one of claims 1 to 6.

14. A storage medium, wherein at least one instruction is stored in the storage medium, and the at least one instruction is loaded and executed by a processor to implement operations performed by the method for controlling motor torque according to any one of claims 1 to 6.
